(19) Europäisches Patentamt
European Patent Office
Office européen des brevets

(11) **EP 1 359 230 B1**

(12) **EUROPEAN PATENT SPECIFICATION**

(45) Date of publication and mention
of the grant of the patent:
**07.05.2008 Bulletin 2008/19**

(51) Int Cl.:
*C21D 1/42* (2006.01)   *C21D 9/46* (2006.01)

(21) Application number: **01271125.5**

(22) Date of filing: **18.12.2001**

(86) International application number:
**PCT/JP2001/011086**

(87) International publication number:
**WO 2002/050317 (27.06.2002 Gazette 2002/26)**

(54) **PRODUCTION METHOD FOR STEEL PLATE AND EQUIPMENT THEREFOR**

VERFAHREN ZUR HERSTELLUNG EINER STAHLPLATTE UND EINRICHTUNGEN HIERFÜR

PROCEDE DE PRODUCTION DE TOLE D'ACIER ET MATERIEL NECESSAIRE

(84) Designated Contracting States:
**DE FR GB**

(30) Priority: **18.12.2000 JP 2000383031**
**02.02.2001 JP 2001026387**
**20.04.2001 JP 2001122955**
**02.07.2001 JP 2001200936**
**24.07.2001 JP 2001223527**
**11.10.2001 JP 2001314160**

(43) Date of publication of application:
**05.11.2003 Bulletin 2003/45**

(73) Proprietor: **JFE Steel Corporation**
**Tokyo, 100-0011 (JP)**

(72) Inventors:
• **FUJIBAYASHI, Akio,**
**c/o Intellectual Property Dpt**
**Chiyoda-ku,Tokyo 100-0011 (JP)**
• **HINO, Yoshimichi,**
**c/o Intellectual Property Dpt**
**Chiyoda -ku ,Tokyo 100-011 (JP)**
• **TAGANE, Akira,**
**c/o Intellectual Property Dpt**
**Chiyoda -ku Tokyo 100-011 (JP)**
• **SEKINE, Hiroshi,**
**c/o Intellectual Property Dpt**
**Chiyoda -ku,Tokyo 100-011 (JP)**
• **SUZUKI, Noritsugu,**
**c/o Intellectual Property Dept**
**Chiyoda-ku Tokyo 100-0011 (JP)**
• **WATANABE, Atsushi,**
**c/o Intellectual Property Dpt**
**Chiyoda-ku,Tokyo 100-0011 (JP)**
• **SUGIOKA, Masatoshi,**
**c/o Intellectual Property Dept**
**Chiyoda-ku,Tokyo 100-0011 (JP)**

(74) Representative: **HOFFMANN EITLE**
**Patent- und Rechtsanwälte**
**Arabellastrasse 4**
**81925 München (DE)**

(56) References cited:
**JP-B1- 41 016 843    JP-B2- 3 015 923**
**JP-B2- 51 009 176    JP-U- 58 035 794**
**US-A- 6 124 581**

• **PATENT ABSTRACTS OF JAPAN vol. 0135, no. 61 (E-859), 13 December 1989 (1989-12-13) & JP 1 232685 A (MITSUBISHI HEAVY IND LTD), 18 September 1989 (1989-09-18)**
• **DATABASE WPI Section Ch, Week 198107 Derwent Publications Ltd., London, GB; Class M, page 24, AN 1981-11374D XP002305570 & SU 740 844 A (LENGD STEEL ROLLING) 18 June 1980 (1980-06-18)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### TECHNICAL FIELD

The present invention relates to a method for manufacturing a steel plate, specifically to a method for manufacturing thereof including on-line tempering, and to an apparatus therefor.

### BACKGROUND ART

To attain high strength and high toughness, steel plates having 8 mm or larger thickness are usually manufactured by rapid cooling of the hot rolled steel plates such as quenching or accelerated cooling, followed by tempering.

In recent years, the quenching or the accelerated cooling is conducted at on-line basis. The tempering, however, is given at off-line basis using a gas combustion furnace, so the tempering needs a long time and significantly lowers the productivity of steel plate.

For improving the productivity, JP-A-4-358022, (the term "JP-A" referred herein signifies the "Japanese Patent Laid-Open No."), proposes a method for tempering a steel plate, which method uses a quenching unit or an accelerated cooling unit, and a rapid tempering unit using a heating means such as electric heating, induction heating, infrared radiation heating, and atmosphere heating, in the manufacturing line of steel plate, thus heating the steel plate, after direct quenching or accelerated cooling, to a specified temperature at a heating speed of 1°C/sec or more, immediately followed by cooling the steel plate at a cooling speed of from 0.05 to 20°C/sec.

The method disclosed in JP-A-4-358022, however, applies short time tempering by sudden rapid heating, so the method has problems that the surface temperature of steel plate exceeds the target level and that large temperature difference appears in the thickness direction of steel plate, failing in uniform tempering of steel plate.

Furthermore, in-line heating a plate by multiple induction coils by starggering temperature control is disclosed in JP-B2-51-009 176 (JP-A-48 025 239). Another technique achieving equalization of temperature distribution in a steel plate while heated by induction coils is revealed in JP-A-01-232 685.

### DISCLOSURE OF THE INVENTION

An object of the present invention is to provide a method for in-line manufacturing a steel plate, which method does not degrade the productivity and assures uniform tempering in the thickness direction of steel plate while avoiding the surface temperature of steel plate from exceeding the target temperature, and to provide an apparatus therefor.

The object is attained by a method for in-line manufacturing a steel plate comprising the steps of: hot-rolling a steel slab to a steel plate; quenching or accelerated cooling the steel plate; and tempering the steel plate after quenching or accelerated cooling by a solenoid induction heating unit, wherein the step of tempering is conducted by discontinuously heating the steel plate in two or more heating cycles to a target temperature, and wherein heating the steel plate in each heating cycle in the step of tempering begins after the surface temperature of the steel plate in preceding heating cycle becomes at or lower than the mean temperature in the thickness direction of the steel plate.

The above-described method is realized by an apparatus for manufacturing a steel plate comprising: a heating furnace; a rolling mill; a quenching unit or an accelerated cooling unit; and two or more solenoid induction heating units for controlling the in line tempering performed by discontinuously heating the steel plate in two or more heating cycles to a target temperature, wherein each heating cycle in the step of tempering beings after the surface temperatures of the steel plate in preceding heating cycle becomes at or lower than the mean temperature in the thickness direction of the steel plate, in this order beginning from upstream side of the manufacturing process.

### BRIEF DESCRIPTION OF THE DRAWINGS

Figure 1 shows an example of apparatus for manufacturing a steel plate according to the present invention.

Figure 2A and Figure 2B are the graphs showing the variations in surface temperature and thickness center temperature of steel plate with time, when the steel plate having 8 mm thickness was heated to around 650°C in one and two heating cycles, respectively.

Figure 3 is the graph showing the variations in surface temperature of steel plate with time, when the steel plate having 40 mm thickness was heated to 580°C in six heating cycles.

Figure 4 shows an example of air injection pipe for cooling the width edge sections of steel plate.

Figure 5 shows an example of water spray nozzle for cooling the width edge sections of steel plate.

Figure 6 shows an example of water cooled roll for cooling the width edge sections of steel plate.

Figure 7 is the graph showing the variations in surface temperature and thickness center temperature of steel plate with time, when the steel plate having 50 mm thickness was heated to around 650°C in one heating cycle.

Figure 8 is the graph showing the variations in surface temperature and thickness center temperature of steel plate with time, when the steel plate having 50 mm thickness was heated to around 650°C in four heating cycles.

Figure 9 is the graph showing the variations in surface temperature and thickness center temperature of steel plate with time, when the steel plate having 50 mm thickness was heated to around 650°C in six heating cycles.

Figure 10 is the graph showing the variations in surface temperature and thickness center temperature of steel plate with time, when the steel plate having 20 mm thickness was heated to around 650°C in four heating cycles by reciprocating the steel plate in a solenoid induction heating unit.

Figure 11 is the graph showing the variations in temperatures at various positions in steel plate with time, when the steel plate having 40 mm thickness was heated to around 650°C in six heating cycles while cooling the edge sections thereof.

## EMBODIMENTS OF THE INVENTION

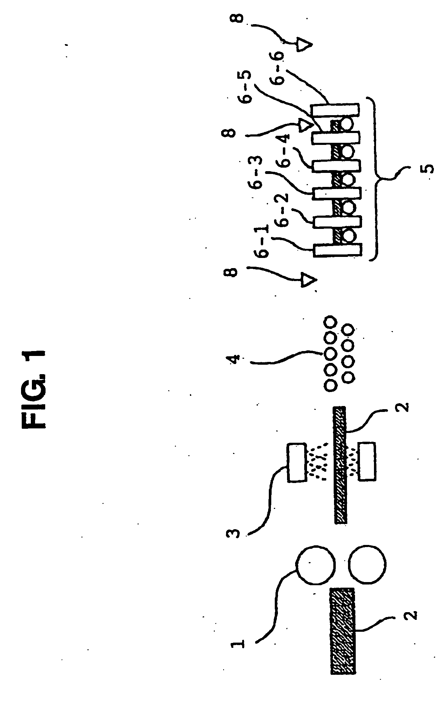

Figure 1 shows an example of apparatus for manufacturing a steel plate according to the present invention.

A steel plate 2 which was hot-rolled by a hot-rolling mill 1 is quenched in a quenching unit 3 and flattened by a leveler 4, followed by tempering in a tempering unit 5 having six solenoid induction heating units 6-1 through 6-6.

During tempering, the steel plate 2 is discontinuously heated to a target temperature around 650°C in two or more heating cycles using a part or whole of the six solenoid induction heating units 6-1 through 6-6 so that the surface temperature should not exceed the target temperature and that the uniform heating should be conducted in the thickness direction of steel plate.

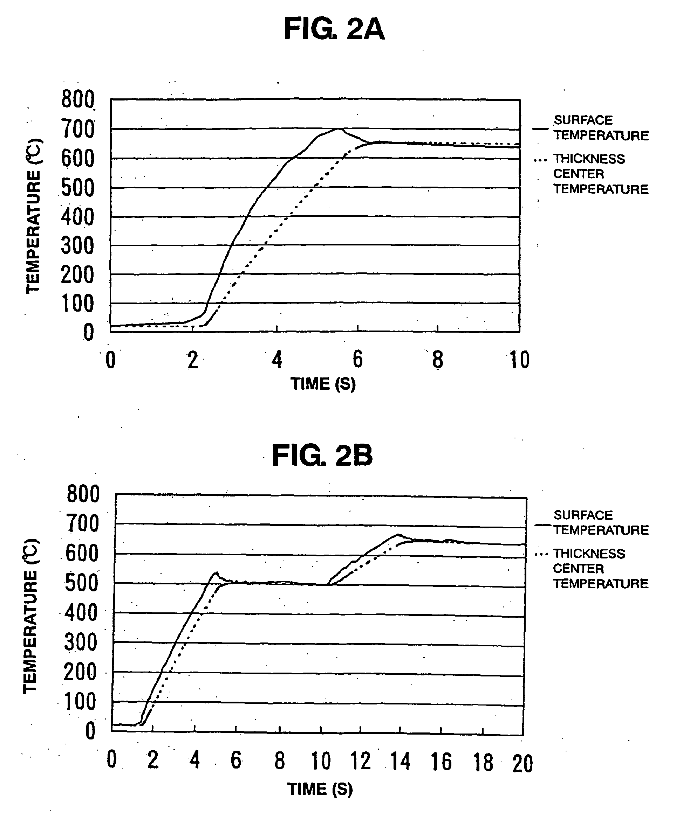

Figure 2A and Figure 2B are the graphs showing the variations in observed surface temperature at width center section of steel plate and in calculated thickness center temperature thereof with time, when the steel plate having 8 mm thickness was heated to around 650°C in one heating cycle or two discontinuous heating cycles, respectively. In these cases, one heating cycle was conducted using the solenoid induction heating unit 6-1 applying 7.5 MW of power input and 1500 Hz of frequency, and two heating cycles were conducted using the solenoid induction heating units 6-1 and 6-2 applying 4.5 MW (6-1) and 3 MW (6-2) of power input and 1500 Hz of frequency. The travel speed of steel plate was 0.2 m/s for both cases.

In one heating cycle, the surface of steel plate is overheated above the target temperature. In two heating cycles, however, the surface of steel plate is not overheated, and the surface and the thickness center of steel plate can be heated to the target temperature within short time, around 15 seconds. Consequently, the method according to the present invention assures uniform tempering over the whole thickness direction of steel plate without degrading the productivity and overheating the surface of steel plate. If the thickness of steel plate increases, it takes a long time for thermal diffusion to the thickness center, so the number of heating cycles should be increased depending on the thickness thereof.

The solenoid induction heating unit is applied as a heating unit because the unit is able to conduct accelerated heating and because the heat generation concentrates on the surface of steel plate, in principle, thus the heating condition may be easily controlled based on the surface temperature.

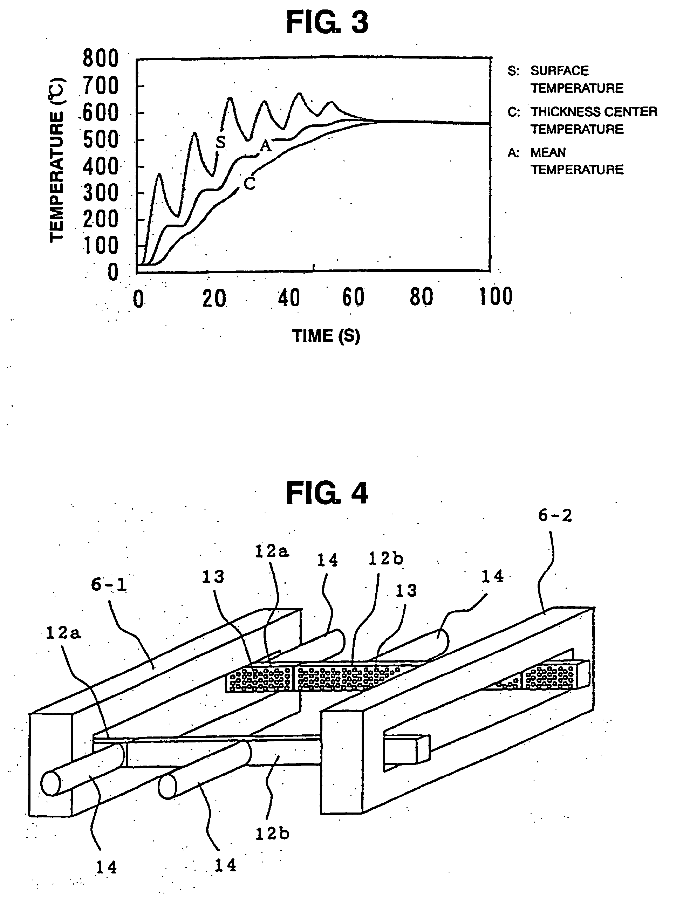

If the heating in succeeding cycle is given after the surface temperature of steel plate becomes at or below the mean temperature of thickness direction of steel plate after the preceding heating cycle, discontinuous heating can be conducted more precisely while avoiding the surface temperature from exceeding the target level. The mean temperature of thickness direction of steel plate is a temperature determined in advance by calculation on a given discontinuous heating pattern. Figure 3 is the graph showing an example of heating the steel plate having 40 mm thickness to a target temperature of 580°C in six heating cycles. In this case, since succeeding heating cycle begins before the surface temperature of steel plate becomes the mean temperature of thickness direction thereof, the surface temperature thereof is overheated to above 600°C.

As shown in Fig. 1, if the leveler 4 is applied to flatten the steel plate before applying tempering, more uniform heating is attained.

On discontinuously heating the steel plate in plurality of cycles, the power applied to the solenoid induction heating unit and the frequency thereof may be fixed. Nevertheless, it is preferable that these variables are decreased at least in the latter half cycles in view of uniform heating in the thickness direction of steel plate without exceeding the target temperature. Specifically, for bringing the rapidness of tempering higher than the rolling pitch, it is preferable that the applied power is increased as far as possible within the range not exceeding the target temperature, so the power applied in the first half cycles is preferably brought to the maxim level, and the power applied in the latter half cycles is preferably decreased.

When the frequency of the solenoid induction heating unit is brought to 200 Hz or more, uniform heating is assured over a wide thickness range covering from thin steel plates to thick steel plates. In particular, when the frequency is decreased along with the progress of heating cycles, the penetration depth of induction current becomes large, and more uniform heating in the thickness direction of steel plate is attained. Actually, the penetration depth at 200 Hz of frequency is about 2 mm. For the case of heating the steel plate having 8 mm thickness, when the penetration depth exceeds 2 mm, the temperature control in the thickness direction becomes impossible. Therefore, the frequency has to be 200 Hz or more. Current commercial use frequencies, however, have an upper limit of around 2000 Hz.

If the total power P applied to the solenoid induction heating unit is determined by eq. (1) given below, the tempering at rapidness at or shorter than the rolling pitch is available, thus giving increased productivity.

$$P \square (1/\eta) \cdot \rho \cdot H \cdot W \cdot L \cdot C_p \cdot (\Delta T/\Delta t) \cdot [(L_c + L_w)/L_c]/L_c] \cdot [1/(N \cdot$$

$$M)] \quad (1)$$

where, $\eta$ is the heating efficiency, $\rho$ is the density of steel (kg/m$^3$), H is the thickness of steel plate (m), W is the width of steel plate (m), L is the length of steel plate (m), $C_p$ is the specific heat (J/kg°C), $\Delta T$ is the necessary temperature rise (°C), $\Delta t$ is the rolling pitch of steel plate (sec.) $L_c$ is the length of coil (m), $L_w$ is the distance between solenoid induction heating units (m), N is the number of solenoid induction units, and M is the number of heating cycles.

For example, on heating the steel plate having 40 mm thickness and 12000 kg weight, assuming $\eta$=0.7, $C_p$=600 J/kg°C, $\Delta T$=600°C, $\Delta t$=180 sec., $L_c$=1 m, and $L_w$=1 m, and if the steel plate travels in one direction through two solenoid induction heating units, the necessary power for one unit thereof becomes 34 MW or more. If three units of solenoid induction heating units are applied to heat the steel plate by traveling thereof by one and a half shuttle, the necessary power becomes 7.6 MW or more. In this manner, eq.(1) is applied to determine the power to carry out the tempering at rapidness at or shorter rolling pitch depending on the number of solenoid induction heating units.

When a steel plate is heated by solenoid induction heating unit, the steel plate is heated not only from top and bottom surfaces but also from width edge sections, so the width edge sections of steel plate are overheated compared with the width center section. The inventors of the present invention investigated the surface temperature of steel plate in the width direction thereof, and found that a width edge zone corresponding to the thickness of steel plate is overheated by about 1.5 fold compared with the width center section. Consequently, if the tempering is conducted while cooling the width edge sections of steel plate, the overheat at the width edge sections thereof is easily prevented.

According to the apparatus given in Fig. 1, the leveler 4 is applied to flatten the steel plate before the treatment aiming at the uniform tempering. If a leveler is positioned after the treatment, the steel plate having excellent flatness is manufactured.

Since the induction heating conducts heating of steel plate by charging energy from the surface thereof, the steel plate likely suffers nonuniform heating in the thickness direction thereof. Accordingly, for soaking, it is necessary to increase the coil length of solenoid induction heating unit as far as possible. If, however, the deflection of steel plate is taken into account, the distance between transfer rolls for supporting the steel plate has a limit of 1.5 m, so it is preferable that the coil length of solenoid induction heating unit is 1. 5 m or less.

The steel plate is cooled between heating cycles. During the cooling period, thermal diffusion occurs from the surface of steel plate toward the thickness center thereof, thus the uniformizing in temperatures in steel plate proceeds. To establish uniform temperature in steel plate, a time depending on the thickness thereof is required. Since the thermal diffusion rate is almost the same between the heating period and the cooling period, the uniform heating is attained in a wide thickness range covering from thin steel plates to thick steel plates if only the distance between the solenoid induction heating units is kept at least to the coil length.

According to the apparatus shown in Fig. 1, thermometers 8 are positioned at both inlet and exit of the tempering unit. With these thermometers 8, power applied to and frequency at the solenoid induction heating unit can be controlled. Particularly in the heat treatment of steel plate, since it is necessary to accurately measure the surface temperature of steel plate in view of quality, the thermometer 8 is preferably one dimensional or two dimensional scanning thermometer which can measure the temperature distribution in the longitudinal direction and the width direction of steel plate at a time.

If a means for cooling is given at inside or exit of the solenoid induction heating unit to cool the width edge sections of steel plate, the overheating at width edge sections can be prevented.

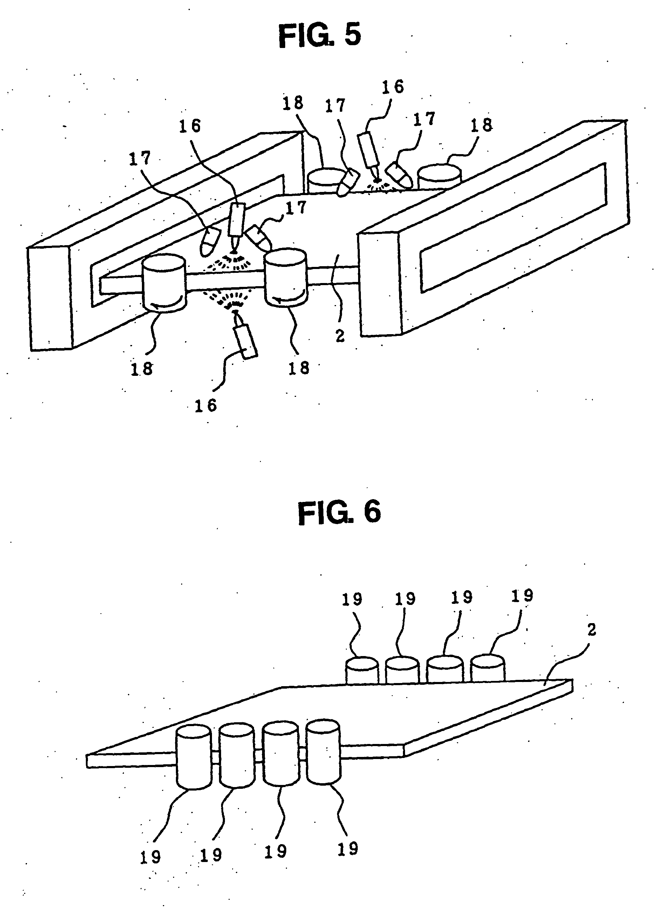

Examples of the means for cooling are air injection pipe shown in Fig. 4, water spray nozzle shown in Fig. 5, and water cooled roll shown in Fig. 6.

According to Fig. 4, a pair of ceramics air injection pipes 12a and 12b, having holes 13 (each having 3 mm in diameter) is located facing both width edge sections of steel plate. Air is supplied from air supply pipes 14 to the air injection pipes 12a and 12b, and the cooling air is uniformly ejected from the holes 13 against the width edge section of steel plate. The flow rate of air is controlled by flow regulator valve, thus the cooling capacity is controlled.

According to Fig. 5, a pair of upper and lower water spray nozzles 16 is located in the vicinity of each width edge section of steel plate between the solenoid induction heating units 6. In addition, air injection nozzles 17 and dewatering rolls 18 are mounted to conduct dewatering to avoid the cooling water ejected from the water spray nozzles 16 from coming near the coil.

According to Fig. 6, plurality of vertical rolls 19, inside of which is cooled by water, or water cooled rolls 19, are located between the solenoid induction heating units. By pressing the water cooled rolls 19 against respective width edge sections of the steel plate 2, the width edge sections thereof are cooled.

The condition for cooling the width edge sections by the means for cooling is controlled by determining the temperature rise curve in the vicinity of width edge sections based on the temperature rise curve near the width center section, which was determined by numerical calculation in advance using the values of width, thickness, and travel speed of steel plate to be treated, in such a way that the temperature at corners of width edge sections should not exceed the target temperature.

With the tempering unit 5 shown in Fig. 1, the steel plate 2 may be discontinuously heated by moving the steel plate 2 in one direction. Similar heating can be attained, however, by reciprocating the steel plate 2 in the tempering unit 5. Particularly for thick steel plates, discontinuous heating in plurality of cycles is required. However, heating under reciprocating travels of steel plate can reduce the number of solenoid induction heating units. The tempering unit 5 is provided with six solenoid induction heating units. At least two solenoid induction heating units can treat a wide thickness range of steel plates covering from thin steel plates to thick steel plates. Particularly for thin steel plates, two or more of solenoid induction heating units are necessary because the temperature reduction between heating cycles is significant.

Embodiment 1

With the steel plate manufacturing apparatus shown in Fig. 1, the steel plates 2 having 50 mm thickness, which were hot-rolled by the hot-rolling mill 1, were cooled by water in the quenching unit 3 to 30°C. Each of the cooled steel plates 2 was flattened by the leveler 4, and then was tempered at 650°C under the respective conditions given in Table 1 using six solenoid induction heating units 6-1 through 6-6. The frequency of each solenoid induction heating units was fixed to 1000 Hz.

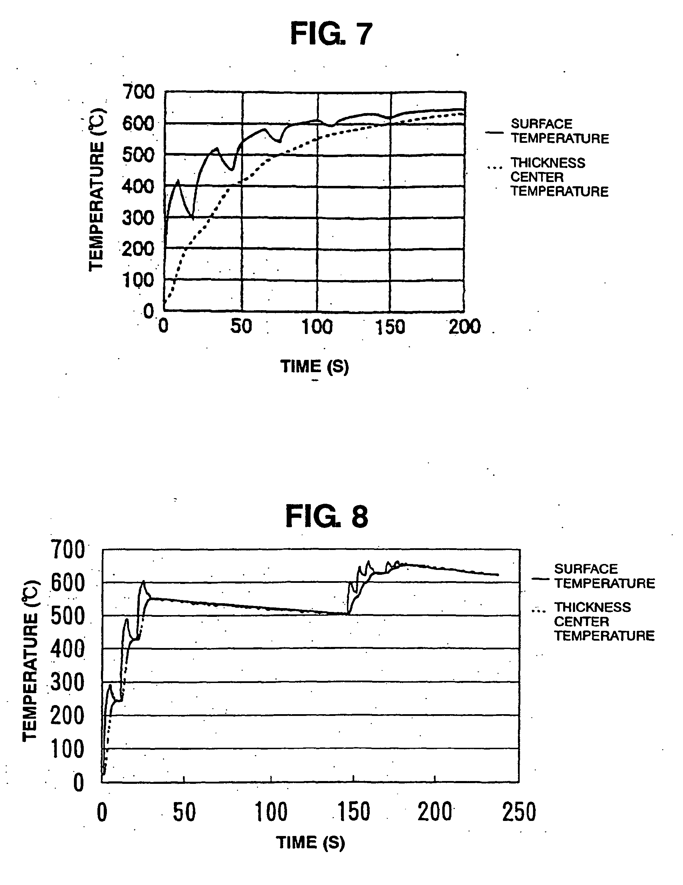

Comparative Example used only the solenoid induction heating unit 6-1 to heat the steel plate to 650°C of the surface temperature in one heating cycle. As shown in Fig. 7, the surface temperature became 650°C within 30 seconds, giving the thickness center section temperature of 400°C. After that, both the surface and the thickness center section of the steel plate became around 500°C, not reaching the target temperature of 650°C.

Example 1 used the solenoid induction heating units 6-1 through 6-4 to heat the steel plate to 650°C of the surface temperature in four heating cycles. As shown in Fig. 8, the surface temperature became 640°C within 200 seconds, giving the thickness center section temperature of 630°C. Thus, the steel plate was almost uniformly heated to the target temperature in the thickness direction thereof.

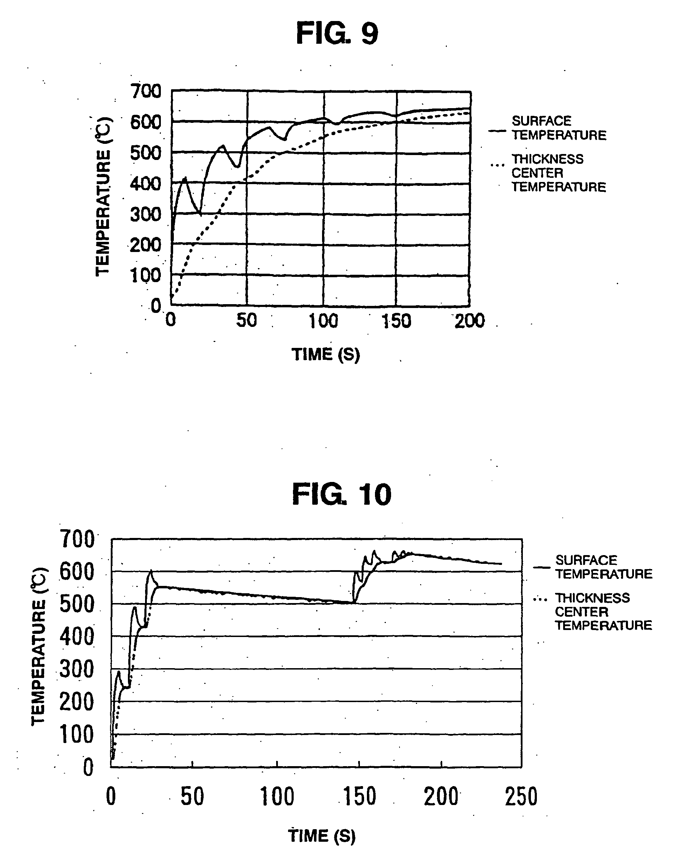

Example 2 used the solenoid induction heating units 6-1 through 6-6 to heat the steel plate to 650°C of the surface temperature in six heating cycles. As shown in Fig. 9, the surface temperature became 650°C within 200 seconds, giving the thickness center section temperature of 640°C. Thus, the steel plate was uniformly heated to the target temperature in the thickness direction thereof.

**Table 1**

| | Travel speed (m/s) | Power applied to induction heating unit (MW) | | | | | |
|---|---|---|---|---|---|---|---|
| | | 6-1 | 6-2 | 6-3 | 6-4 | 6-5 | 6-6 |
| Comparative Example | 0.53 | 10 | - | - | - | - | - |
| Example 1 | 1.56 | 10 | 5 | 6 | 3 | - | - |
| Example 2 | 2.76 | 10 | 10 | 8 | 8 | 6 | 4 |

Embodiment 2

With the solenoid induction heating units 6-1 through 6-6, similar with Example 2 of Embodiment 1, steel plates having 50 mm thickness were heated to 650°C of surface temperature in six heating cycles while varying the power applied to and the frequency of each solenoid induction heating unit as shown in Table 2. The travel speed of the steel plates was fixed to 2.76 m/s.

Also in this Embodiment, almost the same result as in Fig. 9 was attained, giving uniform heating to the target temperature in the thickness direction of steel plate.

**Table 2**

| | Induction heating unit | | | | | |
|---|---|---|---|---|---|---|
| | 6-1 | 6-2 | 6-3 | 6-4 | 6-5 | 6-6 |
| Power input (MW) | 10 | 10 | 8 | 8 | 8 | 6 |
| Frequency (Hz) | 2000 | 1000 | 200 | 200 | 200 | 200 |

Embodiment 3

With the apparatus for manufacturing a steel plate shown in Fig. 1, the steel plates 2 having 20 mm thickness and 10 m length, after hot-rolled by the hot-rolling mill 1, were cooled by water to 30°C by the quenching unit 3. Each of the cooled steel plates was flattened by the leveler 4, then was traveled by one and a half shuttle through the solenoid induction heating units 6-1 through 6-3. In other words, the steel plate was heated in nine heating cycles to apply tempering at 650°C. The power applied at each heating cycle is given in Table 2. The travel speed of the steel plate was 0.17, 0.30, and 0.30 m/s, respective to the going, coming, and going. The frequency of each solenoid induction heating unit was fixed to 1000 Hz. In shuttle movements, 3 s of stop-interval were adopted between movements.
Figure 10 is the graph showing the variations in surface temperature and in thickness center temperature of steel plate with time at front end of the longitudinal direction of steel plate.
Both the surface temperature and the thickness center temperature of steel plate were heated to 650°C almost at the same time.

**Table 3**

| Travel direction | Power applied to induction heating unit (kW) | | | | | |
|---|---|---|---|---|---|---|
| | 6-1 | 6-2 | 6-3 | 6-4 | 6-5 | 6-6 |
| Going | 4000 | 3800 | 3000 | - | - | - |
| Coming | 1800 | 2200 | 2500 | - | - | - |
| Going | 1000 | 600 | 200 | - | - | - |

Embodiment 4

With the apparatus for manufacturing a steel plate shown in Fig. 1, the steel plates 2 having 40 mm thickness, after hot-rolled by the hot-rolling mill 1, were cooled by water to 30°C by the quenching unit 3. Each of the cooled steel plates was flattened by the leveler 4, then was tempered at 650°C under the respective conditions given in Table 4 applying the tempering unit 5 having six solenoid induction heating units 6-1 through 6-6. The travel speed of the steel plate was fixed to 0.04 m/s, and the frequency of each solenoid induction heating unit was fixed to 1000 Hz. The air injection pipes shown in Fig. 4 were arranged inside of each of solenoid induction heating units 6-1 through 6-4 and between each neighboring pair of the solenoid induction heating units 6-1 through 6-5 to eject air against the width edge section of steel plate under the conditions given in Table 4.

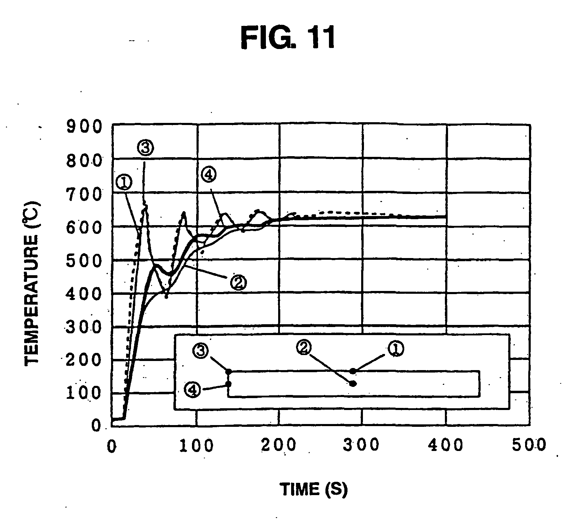

Figure 11 is the graph showing the variations in temperatures at four positions in steel plate at 10 m from longitudinal front end of steel plate with time. The four points were namely ① surface at width center section, ② thickness center, ③ a corner at width edge section, and ④ thickness center section.
At the corner of width edge section, no superheating largely exceeding 650°C occurred, and the temperatures at each observed section increased to 650°C within short time around 200 s.

**Table 4**

| | Induction heating unit | | | | | | Between induction heating units | | | |
|---|---|---|---|---|---|---|---|---|---|---|
| | 6-1 | 6-2 | 6-3 | 6-4 | 6-5 | 6-6 | 1-1 | 2-3 | 3-4 | 4-5 |
| Power input 8 Mbytes (kW) | 8000 | 3000 | 1400 | 700 | 400 | 250 | - | - | - | - |

(continued)

| | Induction heating unit | | | | | | Between induction heating units | | | |
|---|---|---|---|---|---|---|---|---|---|---|
| | 6-1 | 6-2 | 6-3 | 6-4 | 6-5 | 6-6 | 1-1 | 2-3 | 3-4 | 4-5 |
| Air pressure 8 Mbytes (kg/cm$^2$G) | 0.3 | 0.15 | 0.1 | 0.08 | - | - | 0.3 | 0.15 | 0.08 | 0.05 |
| *: Expression "1-2" of the column "Between induction heating units" means the distance between the unit 6-1 and the unit 6-2. | | | | | | | | | | |

**Claims**

1. A method for in-line manufacturing a steel plate comprising the steps of:

   hot-rolling a steel slab to a steel plate;
   quenching or accelerated cooling the steel plate; and in-line tempering the steel plate after quenching or accelerated cooling by a solenoid induction heating unit,

   wherein the step of tempering is conducted by discontinuously heating the steel plate in two or more heating cycles to a target temperature, and
   wherein heating the steel plate in each heating cycle in the step of tempering begins after the surface temperature of the steel plate in preceding heating cycle becomes at or lower than the mean temperature in the thickness direction of the steel plate.

2. The method for manufacturing a steel plate of claim 1, further comprising the step of flattening the steel plate between the step of quenching or accelerated cooling and the step of tempering.

3. The method for manufacturing a steel plate of claim 1, wherein the step of tempering is carried out by reducing the entering electric power to the solenoid induction heating unit at least in latter half cycles.

4. The method for manufacturing a steel plate of claim 1, wherein the step of tempering is carried out by reducing frequency of the solenoid induction heating unit at least in latter half cycles.

5. The method for manufacturing a steel plate of claim 1, wherein the step of tempering is carried out at 200 Hz or higher frequency of the solenoid induction heating unit.

6. The method for manufacturing a steel plate of claim 1, wherein the step of tempering is carried out by cooling width edge sections of the steel plate.

7. An apparatus for manufacturing a steel plate comprising:

   a heating furnace; a rolling mill (1); a quenching unit or an accelerated cooling unit (2); and two or more solenoid induction heating units (6-1, 6-2, ...), and means for controlling the in line tempering performed by discontinuously heating the steel plate in two or more heating cycles to a target temperature, wherein each heating cycle in the step of tempering begins after the surface temperatures of the steel plate in preceding heating cycle becomes at or lower than the mean temperature in the thickness direction of the steel plate, in this order beginning from upstream side of the manufacturing process.

8. The apparatus for manufacturing a steel plate of claim 7 further comprising a leveler (4) positioned between the quenching unit or the accelerated cooling unit and two or more solenoid induction heating units.

9. The apparatus for manufacturing a steel plate of claim 8 further comprising a leveler (4) positioned at downstream side of the two or more solenoid induction heating units.

10. The apparatus for manufacturing a steel plate of claim 7, wherein individual solenoid induction heating units are located at intervals of coil length or longer distance.

11. The apparatus for manufacturing a steel plate of claim 7 further comprising means for cooling (12, 13, 14, 16, 17, 18, 19) positioned at inside or exit of each solenoid induction heating unit to cool width edge section of the steel plate.

12. The apparatus for manufacturing a steel plate of claim 11, wherein the means for cooling is the one selected from the group consisting of air injection pipe, water cooled roll, and water spray nozzle.

**Patentansprüche**

1. Verfahren zur In-Line-Herstellung eines Stahlblechs, umfassend die folgenden Schritte:

   Warmwalzen einer Stahlbramme zu einem Stahlblech;
   Abschrecken oder beschleunigte Abkühlung des Stahlblechs; und
   In-Line-Tempern des Stahlblechs nach dem Abschrecken oder der beschleunigten Abkühlung mittels einer Magnetinduktions-Aufheizeinheit,

   wobei der Schritt des Temperns durch diskontinuierliche Erwärmung des Stahlblechs in zwei oder mehr Aufheizzyklen auf eine Kühltemperatur ausgeführt wird, und
   wobei das Aufheizen des Stahlblechs in jedem Aufheizzyklus im Schritt des Temperns beginnt, nachdem die Oberflächentemperatur des Stahlblechs im vorhergehenden Aufheizzyklus die mittlere Temperatur in Dickenrichtung des Stahlblechs oder kleiner wird.

2. Verfahren zur Herstellung eines Stahlblechs gemäß Anspruch 1, des weiteren umfassend den Schritt des Glättens des Stahlblechs zwischen dem Schritt des Abschreckens oder der beschleunigten Abkühlung und dem Schritt des Temperns.

3. Verfahren zur Herstellung eines Stahlblechs gemäß Anspruch 1, wobei der Schritt des Temperns durch Reduzierung der eintretenden elektrischen Energie zur Magnetinduktions-Aufheizeinheit zumindest im letzten Halbzyklus ausgeführt wird.

4. Verfahren zur Herstellung eines Stahlblechs gemäß Anspruch 1, wobei der Schritt des Temperns durch Reduzieren der Frequenz der Magnetinduktions-Aufheizeinheit zumindest im letzten Halbzyklus ausgeführt wird.

5. Verfahren zur Herstellung eines Stahlblechs gemäß Anspruch 1, wobei der Schritt des Temperns bei einer Frequenz der Magnetinduktions-Aufheizeinheit von 200 Hz oder höher ausgeführt wird.

6. Verfahren zur Herstellung eines Stahlblechs gemäß Anspruch 1, wobei der Schritt des Temperns durch die Abkühlung der Breitenkantensektionen des Stahlblechs ausgeführt wird.

7. Vorrichtung zur Herstellung eines Stahlblechs, umfassend:

   einen Aufheizofen; ein Walzgerüst (1); eine Abschreckeinheit oder eine Einheit (2) für die beschleunigte Abkühlung; und zwei oder mehrere Magnetinduktions-Aufheizeinheiten (6-1, 6-2,...), und Mittel zum Steuern der Inline-Temperung, die durch diskontinuierliche Aufheizung des Stahlblechs in zwei oder mehreren Aufheizzyklen auf eine Zieltemperatur durchgeführt wird, wobei jeder Aufheizzyklus im Schritt des Temperns beginnt, nachdem die Oberflächentemperaturen des Stahlblechs in dem vorhergehenden Aufheizzyklus die mittlere Temperatur in Dickenrichtung des Stahlblechs wird oder niedriger ist, in dieser Reihenfolge beginnend von der stromaufwärtigen Seite des Herstellungsprozesses.

8. Vorrichtung zur Herstellung eines Stahlblechs gemäß Anspruch 7, des Weiteren umfassend einen Leveller (4), der zwischen der Abschreckeinheit oder der Einheit für das beschleunigte Abkühlen der zwei oder mehreren Magnetinduktions-Aufheizeinheiten positioniert ist.

9. Vorrichtung zur Herstellung eines Stahlblechs gemäß Anspruch 8, des Weiteren umfassend eine Richteinheit (4), die an der stromabwärtigen Seite der zwei oder mehreren Magnetinduktions-Aufheizeinheiten positioniert ist.

10. Vorrichtung zur Herstellung eines Stahlblechs gemäß Anspruch 7, wobei individuelle Magnetinduktions-Aufheizeinheiten in Intervallen der Coillänge oder längeren Distanzen platziert sind.

**11.** Vorrichtung zur Herstellung eines Stahlblechs gemäß Anspruch 7, des Weiteren umfassend Mittel zur Abkühlung (12, 13, 14, 16, 17, 18, 19), die an der Innenseite oder dem Austritt jeder Magnetinduktions-Aufheizeinheit positioniert sind, um die Breitenkantensektion des Stahlblechs abzukühlen.

**12.** Vorrichtung zur Herstellung eines Stahlblechs gemäß Anspruch 11, wobei das Mittel zur Abkühlung ein solches ist, das aus der Gruppe ausgewählt ist, die aus einer Luftinjektionsröhre, einer wassergekühlten Walze und einer Wassersprühdüse besteht.

**Revendications**

**1.** Procédé de fabrication en ligne d'une plaque d'acier comprenant les étapes de:

laminer à chaud une brame d'acier en une plaque d'acier;
tremper ou refroidir de manière accélérée la plaque d'acier; et
réaliser un revenu en ligne de la plaque d'acier après la trempe ou le refroidissement accéléré par le biais d'une unité de chauffage à induction par solénoïde,

dans lequel l'étape de revenu est effectuée en chauffant de manière discontinue la plaque d'acier en deux cycles de chauffage ou plus à une température cible, et
où chauffer la plaque d'acier dans chaque cycle de chauffage à l'étape de revenu commence après que la température de surface de la plaque d'acier dans un cycle de chauffage précédent devient inférieure ou égale à la température moyenne dans la direction d'épaisseur de la plaque d'acier.

**2.** Procédé de fabrication d'une plaque d'acier de la revendication 1, comprenant en plus l'étape d'aplanissement de la plaque d'acier entre l'étape de trempe ou de refroidissement accéléré et l'étape de revenu.

**3.** Procédé de fabrication d'une plaque d'acier de la revendication 1, dans lequel l'étape de revenu est effectuée en réduisant la puissance électrique rentrante à l'unité de chauffage à induction par solénoïde au moins dans des derniers demi-cycles.

**4.** Procédé de fabrication d'une plaque d'acier de la revendication 1, dans lequel l'étape de revenu est effectuée en réduisant la fréquence de l'unité de chauffage à induction par solénoïde au moins dans des derniers demi-cycles.

**5.** Procédé de fabrication d'une plaque d'acier de la revendication 1, dans lequel l'étape de revenu est effectuée à 200 Hz ou à une fréquence supérieure de l'unité de chauffage à induction par solénoïde.

**6.** Procédé de fabrication d'une plaque d'acier de la revendication 1, dans lequel l'étape de revenu est effectuée en refroidissant des sections de bordures en largeur de la plaque d'acier.

**7.** Appareil de fabrication d'une plaque d'acier comprenant:

un four de chauffage; un laminoir (1); une unité de trempe ou une unité de refroidissement accéléré (2); et deux unités de chauffage à induction par solénoïde (6-1, 6-2,...) ou plus, et un moyen pour commander le traitement de revenu en ligne effectué en chauffant de manière discontinue la plaque d'acier dans deux cycles de chauffage ou plus à une température cible, où chaque cycle de chauffage à l'étape de revenu commence après que la température de surface de la plaque d'acier dans un cycle de chauffage précédent devient inférieure ou égale à la température moyenne dans la direction d'épaisseur de la plaque d'acier, commençant dans cet ordre à partir d'un côté en amont du processus de fabrication.

**8.** Appareil de fabrication d'une plaque d'acier de la revendication 7 comprenant en plus un appareil de nivellement (4) positionné entre l'unité de trempe ou l'unité de refroidissement accéléré et deux unités de chauffage à induction par solénoïde ou plus.

**9.** Appareil de fabrication d'une plaque d'acier de la revendication 8 comprenant en plus un appareil de nivellement (4) positionné à un côté en aval des deux unités de chauffage à induction par solénoïde ou plus.

**10.** Appareil de fabrication d'une plaque d'acier de la revendication 7, dans lequel des unités de chauffage à induction par solénoïde individuelles sont situées à des intervalles de longueur de bobine ou avec une distance plus importante.

11. Appareil de fabrication d'une plaque d'acier de la revendication 7 comprenant en plus un moyen pour refroidissement (12, 13, 14, 16, 17, 18, 19) positionné à l'intérieur ou à la sortie de chaque unité de chauffage à induction par solénoïde pour refroidir une section de bordure en largeur de la plaque d'acier.

12. Appareil de fabrication d'une plaque d'acier de la revendication 11, dans lequel le moyen pour refroidissement est celui sélectionné parmi le groupe se composant d'un tuyau d'injection d'air, d'un rouleau refroidi par de l'eau, et d'une buse de pulvérisation d'eau.

# FIG. 1

# FIG. 2A

# FIG. 2B

# FIG. 3

S: SURFACE
   TEMPERATURE

C: THICKNESS CENTER
   TEMPERATURE

A: MEAN
   TEMPERATURE

# FIG. 4

# FIG. 5

# FIG. 6

## FIG. 7

## FIG. 8

## FIG. 9

## FIG. 10

# FIG. 11

**REFERENCES CITED IN THE DESCRIPTION**

**Patent documents cited in the description**

- JP 4358022 A
- JP 51009176 B
- JP 48025239 A
- JP 1232685 A